# EUROPEAN PATENT APPLICATION

(11) **EP 0 932 278 A1**
(43) Date of publication of application: **28.07.1999**
(21) Application number: 99300299.7
(22) Date of filing: 18.01.1999
(51) Int. Cl.: H04L 12/46

(54) **Network system**

(30) Priority: 23.01.1998 JP 1181698
(71) Applicant: SONY CORPORATION, Tokyo (JP)
(72) Inventor: Sugita, Takehiro, Shinagawa-ku, Tokyo (JP)
(74) Representative: Ayers, Martyn Lewis Stanley

(57) **Abstract**

When many buses are provided, addition/omission of the bus frequently occurs. whenever the addition/omission of the bus occurs, a configuration process of the overall network system must be performed. Thus, interruption of data communication occurs frequently. A configuration process is performed such that first bridges in a network sequentially assign continuous identification number (ID) to three buses. A second bridge performs a configuration process for sub-networks.

## Description

The present invention relates to a network system incorporating a plurality of buses each of which is constituted by connecting a plurality of nodes to one another with communication-control signal lines each of which is capable of transmitting a control signal and an information signal in a mixed manner.

Network systems have been widely used each of which is constituted by connecting a multiplicity of computers, peripheral equipment or AV apparatuses to one another. Each of the apparatuses which are connected as described above is called a "node" which includes an interface for establishing the connection with the other apparatuses.

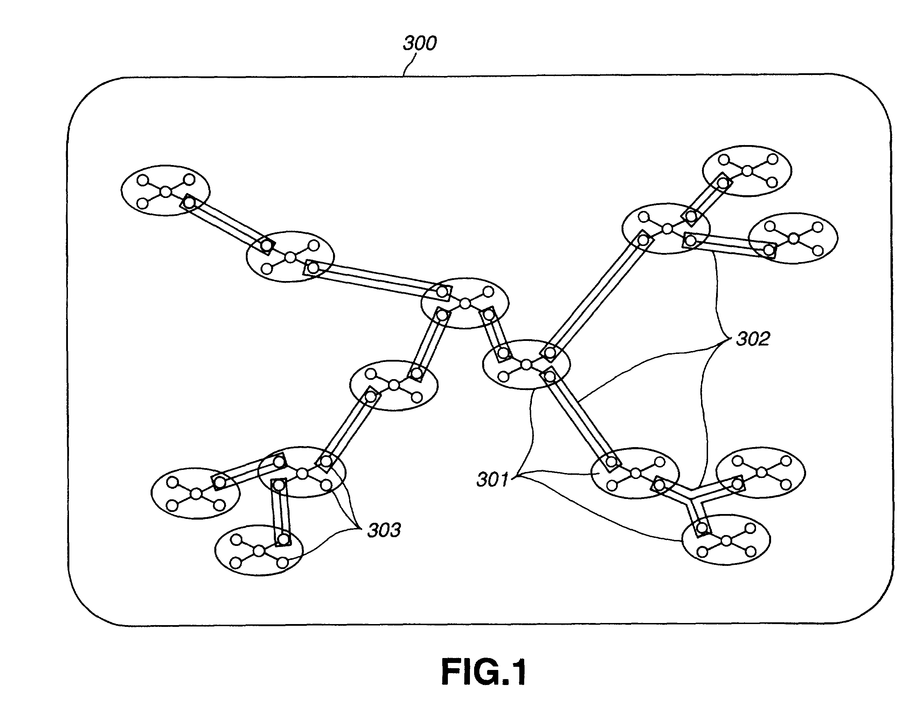

The structure of the conventional network system is shown in Fig. 1 of the accompanying drawings. A network system 300 is constituted by connecting a plurality of buses 301 to one another with bridges 302, the buses 301 being constituted by connecting a plurality of nodes 303 to one another through communication-control signal lines.

The communication-control signal lines may be signal lines of a type based on IEEE1394 which is a standard for serial interfaces. Not more than sixty three nodes can be connected to the bus 301 because of the regulation of IEEE1394. If a larger number of nodes must be connected, a plurality of buses must be prepared to connect the buses to one another with the bridges 302. IEEE1394 defines a fact that a large-scale network system can be constituted by not more than 1023 buses. Moreover, IEEE1394 defines a fact that determination of states of the connection among the buses and assignment of identification (ID) numbers for the buses are automatically performed. The process for assigning the ID to the bus is called a configuration process. The configuration process is performed when a bus is added or omitted, the configuration process being performed in the overall network system. If the number of the buses is increased, addition and omission of the buses are performed frequently. Whenever the addition or the omission is performed, the configuration process must be performed in the overall network system. Therefore, interruption of data communication frequently occurs. What is worse, there is apprehension that the apparatus is operated incorrectly or data is eliminated. Since the computer and peripheral equipment must have significant reliability, frequent configuration processes undesirably cause the operations of the apparatuses to be instable.

In a case of a large-side network system having a multiplicity of buses, there is a possibility of using, to connect the buses to one another, a line connection type communication passage, such as the public telephone network, or a wireless communication. The communication passages of the above-mentioned types suffer from instable connection and easily encounter occurrence of unintentional connection and disconnection. In the above-mentioned case, there is a possibility that configuration is frequently repeated. Thus, there is apprehension that the network system becomes instable.

If the apparatus, for example, the node or the bridge, breaks down or becomes defective, the network system cannot always be operated in conformity with the foregoing standard. Also the foregoing fact causes the operation of the network system to be instable.

Accordingly, an object of the present invention is to provide a network system structured such that transmission of a configuration command is limited to only the inside portion of the same sub-network to prevent an adverse influence of sub-net configuration occurring due to connection/disconnection of a bus which is exerted on the overall network.

To achieve the above-mentioned object, according to one aspect of the present invention, there is provided a network system structured such that the overall network system is divided into a plurality of sub-networks; buses in each sub-network are connected to one another through a first bridge; the sub-networks are connected to one another through a second bridge; and configuration processes are performed individually such that a configuration process of the buses in the sub-network is performed by the first bridge and a configuration process of the sub-networks is performed by the second bridge.

The first bridge communicates, to the other buses, a bus configuration command generated when the configuration in the sub-network has been changed. However, the second bridge does not communicate the bus configuration command generated when the configuration in the sub-network has been changed over a boundary of the sub-network only when a sufficiently large number of the identification numbers is maintained.

Therefore, if the size of the network system is enlarged, an influence of the configuration which is exerted on each node can be prevented. As a result, the operation in each sub-network can stably be performed. Thus, the reliability of the network system can be improved.

The invention will be further described by way of non-limitative example with reference to the accompanying drawings, in which:-
Fig. 1 is a diagram showing the structure of a conventional network system;
Fig. 2 is a diagram showing the structure of an embodiment of a network system according to the present invention;
Fig. 3 is a diagram showing ranges for which a command to perform the configuration process generated in the sub-network according to the embodiment and issued to the buses is communicated;
Fig. 4 is a diagram showing ranges for which a command to perform the configuration process generated in the sub-network according to the embodiment and issued to the sub-network is communicated;
Fig. 5 is a diagram showing a format of 10-bit ID (an address) assigned to each bus and defined in IEEE1394;
Fig. 6 is a diagram showing a format shown in Fig. 5 and structured such that 10 upper bits are assigned as the sub-network ID and the lower bits are assigned as the bus ID;
Fig. 7 is a diagram showing a method of generating sub-net ID from the address;
Fig. 8 is a diagram showing the operation of the network system when a packet is transmitted to a node in another sub-network by using the sub-net ID and the bus ID shown in Fig. 6;
Fig. 9 is a block diagram showing the internal structures of first and second bridges;
Fig. 10 is a flow chart of the operation of the bridge serving as the first bridge and shown in Fig. 9; and
Fig. 11 is a flow chart of the operation of the bridge serving as the second bridge and shown in Fig. 9.

An embodiment of a network system according to the present invention will now be described with reference to the drawings.

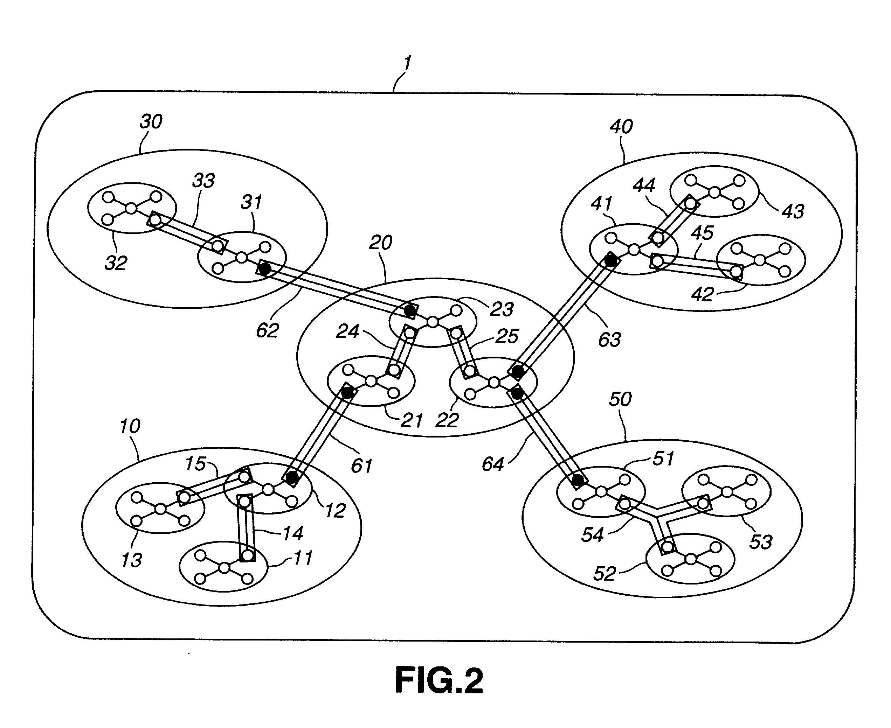

A network system 1 according to this embodiment is, as shown in Fig. 2, constituted by connecting a multiplicity of computers, peripheral equipment or AV apparatuses to one another. Each of the apparatuses includes an interface for establishing the connection with the other apparatuses. The foregoing apparatuses are called nodes.

IEEE1394 defines the largest number of nodes which can be connected in one bus to be 63. A small-size network system can be constituted by one bus. If a larger number of nodes are attempted to be connected, a plurality of buses must be prepared and the buses must be connected to one another with bridges. IEEE1394 defines the largest number of buses which are provided for one network system to be 1,023.

On the other hand, the network system 1 according to this embodiment of the present invention shown in Fig. 2 incorporates the bus for each of five sub-networks 10, 20, 30, 40 and 50.

The sub-network 10 includes three buses 11, 12 and 13 constituted by connecting a plurality of nodes to one another through communication control signal lines which are in conformity with, for example, IEEE1394. The bus 11 and the bus 12 are connected to each other through a first bridge 14. The bus 12 and the bus 13 are connected to each other through a first bridge 15. The sub-network 20 includes three buses 21, 22 and 23. The bus 21 and the bus 23 are connected to each other through a first bridge 24. The bus 22 and the bus 23 are connected to each other through a first bridge 25.

The sub-network 30 includes two buses 31 and 32. The bus 31 and the bus 32 are connected to each other through a first bridge 33. The sub-network 40 includes three buses 41, 42 and 43. The bus 41 and the bus 42 are connected to each other through a first bridge 45. The bus 41 and the bus 43 are connected to each other through a first bridge 44. The sub-network 50 includes three buses 51, 52 and 53. The three buses 51, 52 and 53 are connected to one another through a first bridge 54.

The sub-network 10 and the sub-network 20 of the foregoing sub-networks are connected to each other through a second bridge 61. The sub-network 20 and the sub-network 30 are connected to each other through a second bridge 62. The sub-network 20 and the sub-network 40 are connected to each other through a second bridge 63. The sub-network 20 and the sub-network 50 are connected to each other through a second bridge 64.

Each of the first bridges performs a configuration process for sequentially assigning continuous identification numbers (ID) to a plurality of buses. For example, the first bridge 14 and the first bridge 15 in the sub-network 10 performs a configuration process for sequentially assigning continuous identification numbers (ID) to the three buses 11, 12 and 13. Hereinafter configuration for buses in a sub-network is defined to be sub-net configuration because the configuration is performed in the sub-network.

Each of the second bridges performs a configuration process for sequentially assigning continuous ID to a plurality of the sub-networks. For example, the second bridge 61 performs a configuration process for the sub-network 10 and the sub-network 20. Hereinafter configuration of the sub-network is defined to be net configuration because the configuration of the overall network for the sub-network is performed.

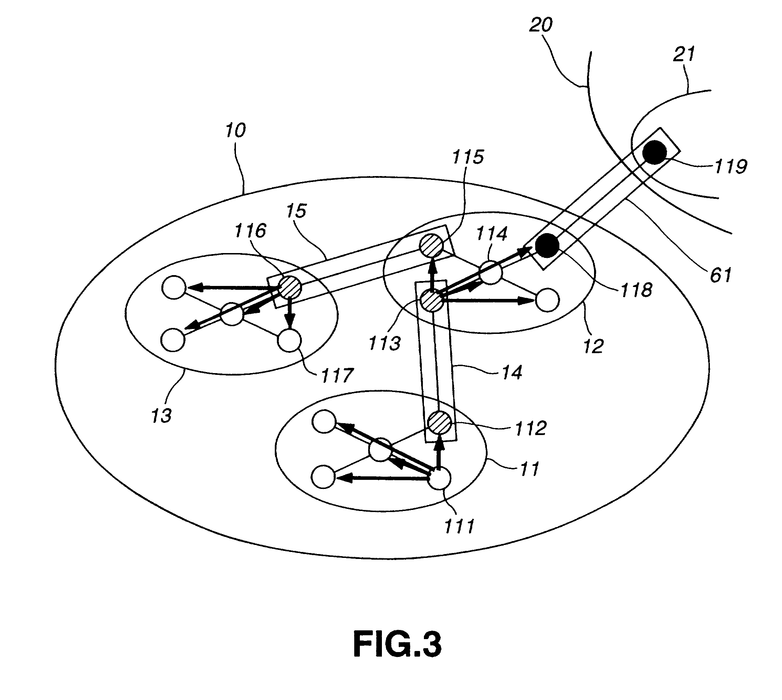

Fig. 3 shows ranges for which a command to perform the configuration process generated in the sub-network 10 and issued to the buses 10, 12 and 13 is communicated, that is, ranges for which the sub-net configuration command is communicated.

The first bridge 14 is constituted by an inlet/outlet port (hereinafter called a portal) 112 in the bus 11 and a portal 113 in the bus 12. The first bridge 15 is constituted by a portal 115 in the bus 12 and a portal 116 in the bus 13.

The second bridge 61 is constituted by a portal 118 in the bus 12 and a portal 119 in the bus 21 in the sub-network 20.

The portal is an apparatus having a function to serve as the node in the bus and including an interface with another portal in order to establish the connection between the buses. The detailed structure of the portal will now be described.

An assumption is made that the sub-net configuration command has been issued from a node 111 in the bus 11. The sub-net configuration command issued from the node 111 is communicated to all of nodes in the bus 11 including the portal 112. Then, the portal 112 communicates the sub-net configuration to the portal 113. The portal 113 communicates the sub-net configuration command to all of nodes in the bus 12 including the portal 115 and the portal 118. Then, the portal 115 communicates the sub-net configuration command to the portal 116. The portal 116 communicates the sub-net configuration command to all of nodes in the bus 13. The portal 118 in the bus 12 is a portal for the second bridge 61. Since the portal 118 has not a function for communicating the sub-net configuration command to the bus in another sub-network, the portal 118 does not communicate the sub-net configuration command to the portal 119. Thus, the sub-net configuration command is communicated to only all of the buses in the same sub-network 10.

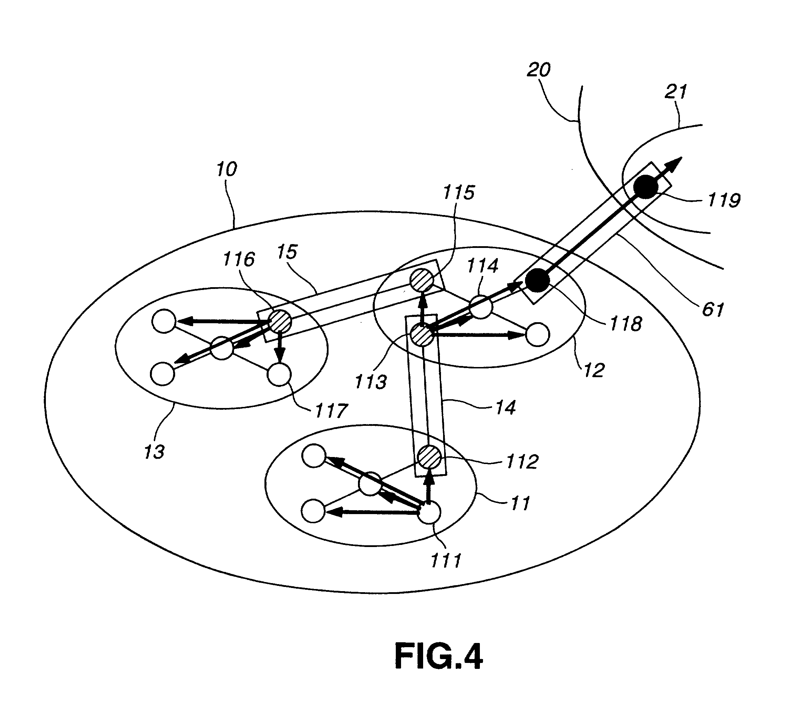

Fig. 4 shows a range for which the net configuration command issued in the sub-network 10 is communicated.

An assumption is made that a net configuration command has been issued from the node 111 in the bus 11. The net configuration command issued from the node 111 is communicated to all of the nodes in the bus 11 including the portal 112. Then, the portal 112 communicates the net configuration command to the portal 113. The portal 113 communicates the net configuration command to all of the nodes in the bus 12 including the portals 115 and 118. Then, the portal 115 communicates the net configuration command to the portal 116. The portal 116 communicates the net configuration command to all of the nodes in the bus 13. The portal 118 in the bus 12 is a portal for the second bridge 61. Since the portal 118 has a function for communicating the net configuration command to the buses in another sub-network, the portal 118 communicates the sub-net configuration command to the portal 119 belonging to the bus 21 of the sub-network 20. The portal 119 communicates the net configuration command to all of the nodes in the bus 21. Thus, the net configuration command is communicated to all of the nodes in the network over the boundary of the sub-networks.

The communication of each of the configuration commands described with reference to Figs. 3 and 4 is performed when the first and second bridges make a reference to the identification number (ID).

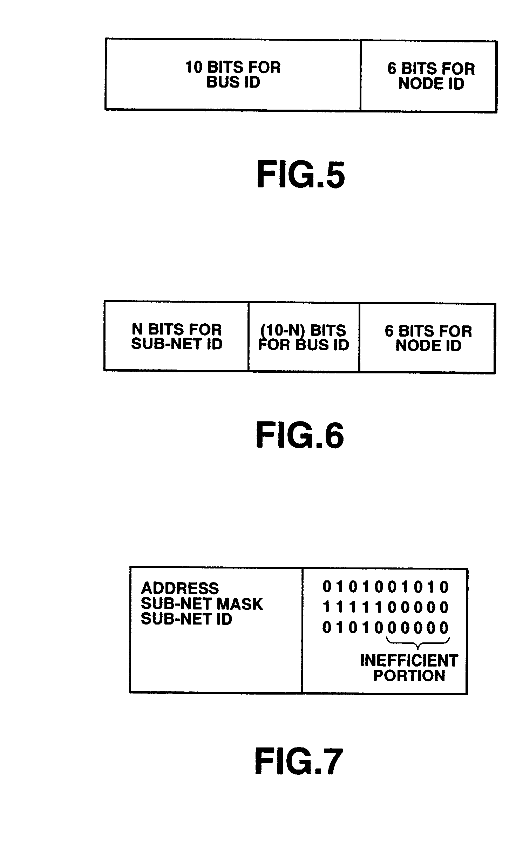

Fig. 5 shows the structure of a 10-bit ID (an address) defined in IEEE1394 and assigned to the bus. The ID is composed of an upper 10-bit ID for the bus and a lower 6-bit node ID.

In this embodiment, N upper bits of 10 bits, which have been assigned as the bus ID, are assigned as ID for the sub-network and (10 - N) lower bits are assigned as ID for the bus, as shown in Fig. 6. Although fixed length assignment may be employed such that five bits are used as the ID for the sub-network and five bits are used as the bus ID, a concept as a mask (expressed as a sub-net mask) for instructing ID for the sub-network is employed with which the bus ID has a variable length.

The sub-net mask is constituted such that each of the five upper bits is 1 and each of the five lower bits is 0, as shown in Fig. 7. When AND of the sub-net mask and the 10 upper bits of the address is obtained, the ID (expressed as sub-net ID) for the sub-network can be extracted. When the sub-net mask is reversed and AND of the reversed sub-net mask and 10 upper bits of the address is obtained, the bus ID can be extracted.

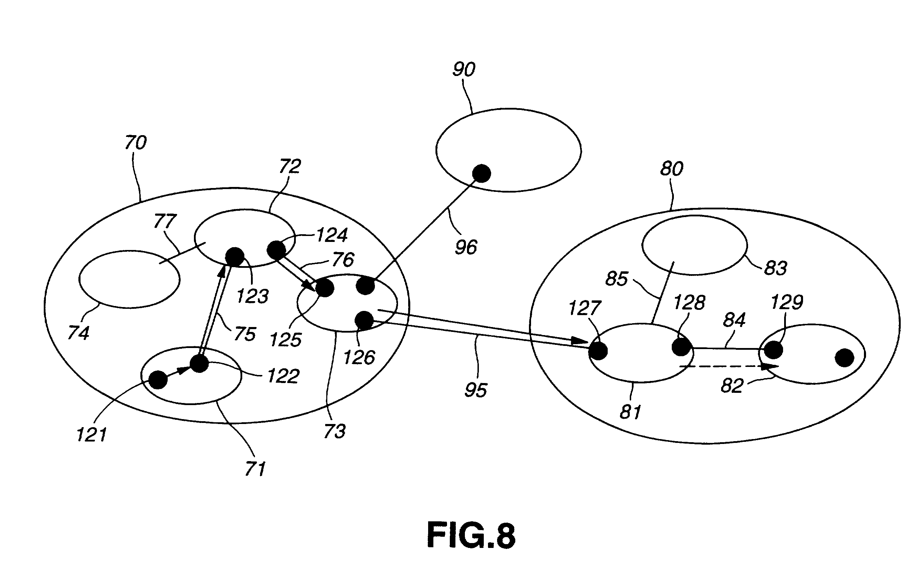

A network system using the sub-net ID and the bus ID to transmit data (a packet) to the nodes in another sub-network is shown in Fig. 8. The network system shown in Fig. 8 has a similar structure to that of the network system 1 shown in Fig. 2. Note that the sub-net ID (SNID) has a size of three bits and the bus ID (BID) has a size of three bits. Also the node ID has a size of three bits.

An assumption is made that a node 121 in a bus 71 in a sub-network 70 transmits a packet to nodes in a bus 82 in a sub-network 80. The SNID of the sub-network 80, which is the destination address to which the packet is transmitted, is 001, while the BID ofthe bus 82 is 001.

A portal 122 in the bus 71 constituting a first bridge 75 and a portal 124 in a bus 72 constituting a first bridge 76 are arranged to transfer a packet destined to SNID 001 or 010 to an adjacent bus.

A portal 126 in a bus 73 constituting a second bridge 95 is arranged to transfer a packet destined to SNID 001. A portal 128 in the bus 81 constituting a first bridge 84 is arranged to transfer a packet destined to BID 001 in the same sub-network 80 (SNID = 001).

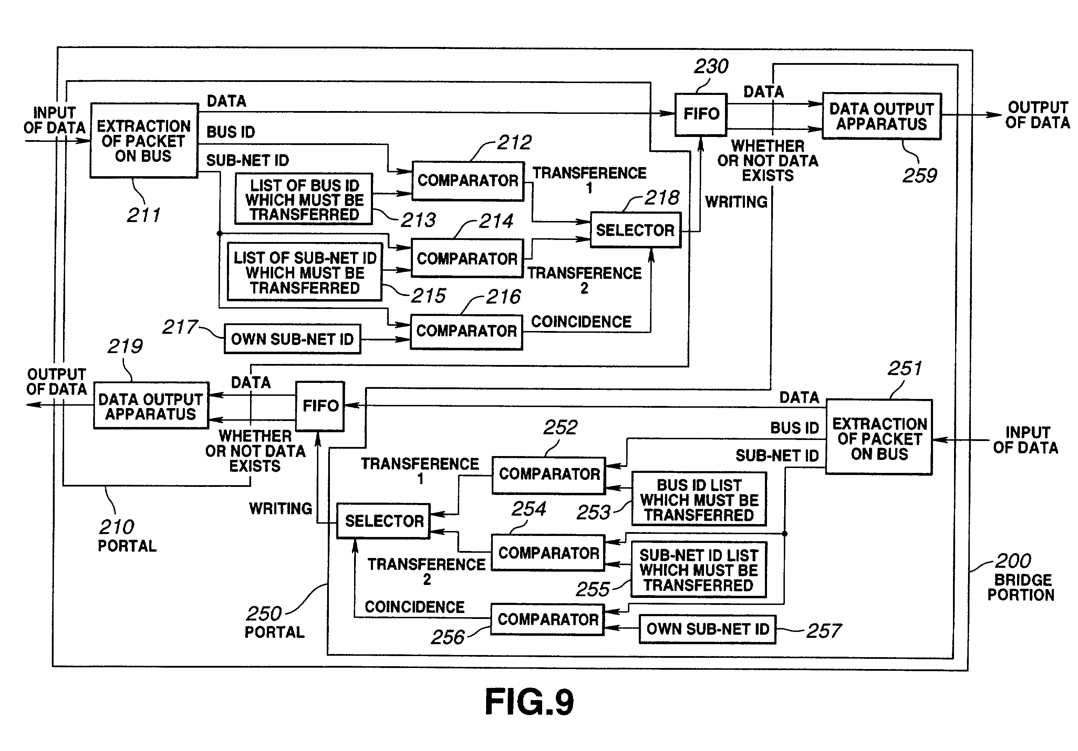

The detailed structure of each bridge is shown in Fig. 9. Referring to Fig. 9, a bridge 200 is constituted by connecting a portal 210 and a portal 250 to each other through a FIFO 230 and a FIFO 260. The bridge 200 may serve either of the first bridge or the second bridge.

The portal 210 receives data supplied as a packet through a packet inlet portion 211 so as to separate data above into bus ID and sub-net ID. Data received through the packet inlet portion 211 is transmitted to the FIFO 230.

The bus ID supplied from the packet inlet portion 211 is passed to the comparator 212. The comparator 212 is supplied with also information about a range of the bus ID which correspond to the bridge from a list 213 of bus ID which must be transferred.

The bus ID received through the packet inlet portion 211 is supplied to comparators 214 and 216. Also information about the range of the sub-net ID to which the bridge corresponds is supplied to the comparator 214 from a list 215 of the sub-net ID which must be transferred. The comparator 216 is supplied with the own sub-net ID from a storage portion 217.

Results of comparisons made by the comparators 212, 214 and 216 are communicated to a selector 218. If a result indicating coincidence is communicated from the comparator 216, the selector 218 selects a result expressed as "TRANSFERENCE 1" communicated from the comparator 212. If a result indicating non-coincidence is communicated from the comparator 216, the selector 218 selects a result expressed as "TRANSFERENCE 2" communicated from the comparator 214.

The ID selected by the selector 218 is communicated to the FIFO 230. Data and a signal indicating whether or not data exist are supplied from the FIFO 230 to a data output apparatus 259 which constitutes a portal 250.

Also the portal 250 incorporates illustrated elements so as to communicate, to a data output apparatus 219 which constitutes the portal 210, data and a signal indicating whether or not data exists which are communicated from the FIFO 260.

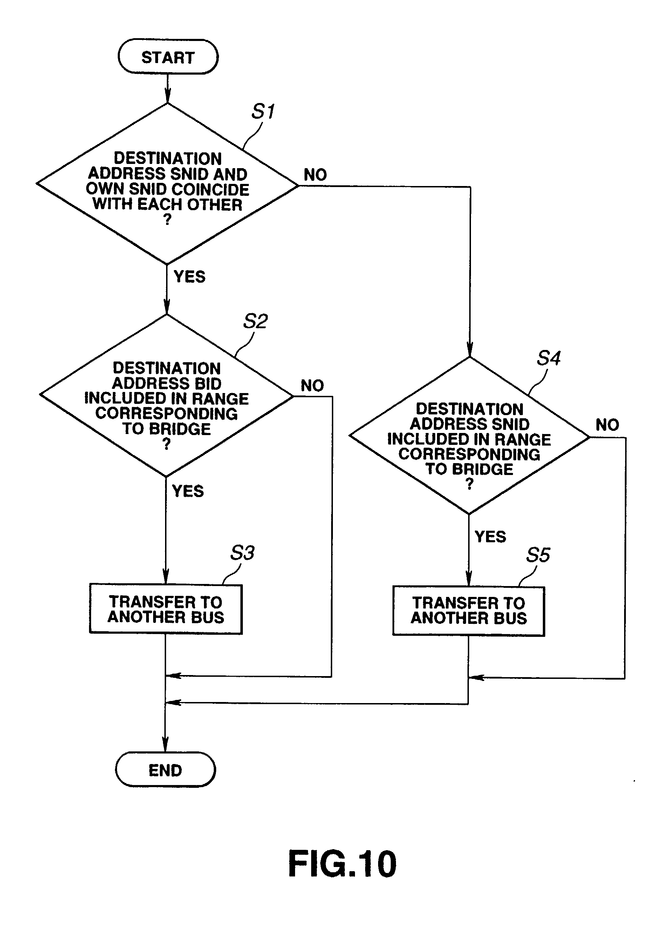

An algorithm which is employed when the bridge 200 shown in Fig. 9 serves as the first bridge is shown in Fig. 10. The foregoing algorithm is employed to determine whether or not the first bridge transfers a packet in a bus to an adjacent bus.

Initially, in step S1, whether or not the destination address received by the packet inlet portion 211 coincides with the own sub-net ID (SNID) is determined by the comparator 216 by making a reference to the storage portion 217 which stores the own sub-net ID. If the comparator 216 determines that the address and the SNID coincide with each other, the packet is destined to the same sub-network. Therefore, the operation proceeds to step S2.

In step S2 the comparator 212 determines whether or not the BID of the destination address of the packet satisfies a range for the BID in which transference to an adjacent bus is permitted by making a reference to the bus ID list 213 of the buses to which the transference is performed. If the comparator 212 determines the coincidence of the BID, the comparator 212 communicates, to the FIFO 230, the ID selected by the selector 218 in order to transfer the packet to the adjacent bus. In step S3 the packet is transferred from the portal which has received the packet to another portal. The portal to which the packet has been transferred transmits the packet to the inside portion of the adjacent bus.

If the comparator 216 determines non-coincidence of the SNID in step S1, the operation proceeds to step S4. In step S4 the portal which has received the packet destined to another sub-network determines whether or not the SNID of the destination address satisfies a range of the SNID to which transference to an adjacent bus is performed by making a reference to the sub-net ID list of the sub-network to which the transference is performed. If the coincidence is determined, the packet is transferred to the adjacent bas by communicating the ID selected by the selector 218 to the FIFO 230. The portal which has received the packet transfers, to another portal, the foregoing result "TRANSFERENCE 2". The other portal which has received the result transmits the packet to the inside portion of the adjacent bus.

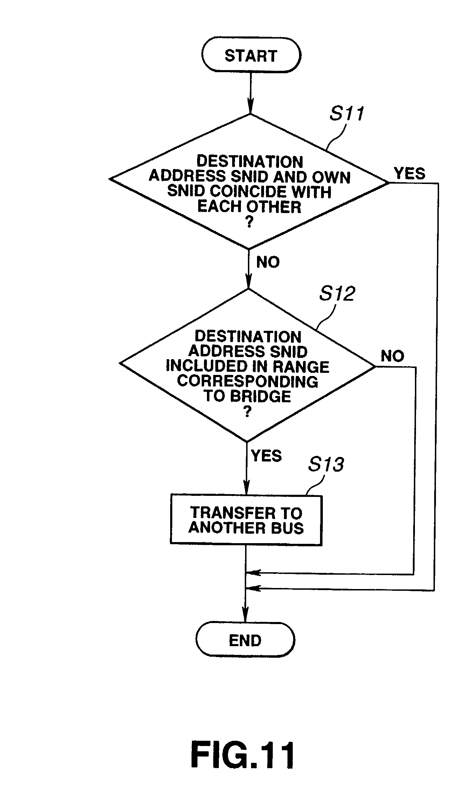

An algorithm which is employed when the bridge 200 shown in Fig. 9 serves as the second bridge is shown in Fig. 11. The foregoing algorithm is used to determine whether or not the packet is transferred to a node in another sub-network.

Initially, in step S11, whether or not the destination address received by the packet inlet portion 211 coincides with the own sub-net ID (SNID) is determined by the comparator 216 by making a reference to the storage portion 217 which stores the own sub-net ID. If the comparator 216 determines that the address and the SNID coincide with each other, the packet is destined to the same sub-network. Therefore, the operation is interrupted. If determination of non-coincidence of the SNID is made by the comparator 216 in step S11, the operation proceeds to step S12.

In step S12 the comparator 214 determines whether or not the received SNID of the packet satisfies a range of the bridge by making a reference to a sub-net ID list 215. If the comparator 214 determines coincidence of the SNID, the comparator 214 transfers the packet to the adjacent bus by communicating, to the FIFO 230, the ID selected by the selector 218. In step S13 the portal which has received the packet transfers the packet to another portal. The portal which has received the packet transmits, to the inside portion of the adjacent bus, the packet.

Referring back to Fig. 8, the packet transmitted in the bus 71 is first transferred to the adjacent bus 72 by the portal 122. The packet transferred to the bus 72 is transferred to the adjacent bus 73 by the portal 124.

The portals 122 and 124 are operated in accordance with a flow chart shown in Fig. 10. The flow chart is omitted from description.

The packet transferred to the BUS 73 is transferred, to the bus 81 in the adjacent sub-network 80, by the portal 126. The portal 126 is operated in accordance with a flow chart shown in Fig. 11. The flow chart is omitted from description.

The packet transferred to the bus 81 is supplied to the adjacent bus 82 by the portal 128. The portal 128 is operated in accordance with the flow chart shown in 10. The flow chart is omitted from description. The packet transferred to the bus 82 is received by the node which is the destination address.

As described above, the network system shown in Fig. 8 is able to transmit a packet to a node in another sub-network by using the sub-net ID and the bus ID.

The network system according to the present invention has the structure that the network is divided into a plurality of the sub-networks. Moreover, an environment is realized in which each sub-network performs a sub-net configuration. In addition, transmission of the configuration command is limited to only the inside portion of the same sub-network. Thus, an adverse influence of the sub-net configuration exerted due to connection/disconnection of the bus on the overall network can be prevented.

Although the invention has been described in its preferred form with a certain degree of particularity, it is understood that the present disclosure of the preferred form can be changed in the details of construction and in the combination and arrangement of parts without departing from the spirit and the scope of the invention as hereinafter claimed.

## Claims

1. A network system comprising:
a plurality of sub-networks each of which is constituted by connecting a plurality of buses constituted by connecting a plurality of nodes to one another through a common communication control signal line;
a first bridge for sequentially and continuously assigning identification numbers to said plural buses; and
a second bridge for assigning identification numbers to said plural sub-networks.

2. A network system according to claim 1, wherein
said first bridge communicates, to another bus in a predetermined sub-network, a command to again assign the bus identification number generated when a state of the connection of the buses in a predetermined sub-network has been changed.

3. A network system according to claim 1 or 2, wherein
said second bridge does not communicate a command to again assign the bus identification number generated when a state of the connection of the buses in a predetermined sub-network has been changed over a boundary of the predetermined sub-network only when a sufficiently large number of the identification numbers is maintained.

4. A network system according to claim 1, 2 or 3, wherein
said first bridge determines an order of assigning the identification numbers to the buses in the predetermined sub-network.

5. A network system according to claim 4, wherein
said first bridge determines the order of assigning the identification numbers in accordance with a state of the connections of the buses in the predetermined sub-network, a route through which cycle synchronization is distributed, a manager for managing the state of the connections of the buses and a manager for managing cycle synchronization in the sub-network.

6. A network system according to any one of claims 1 to 5, wherein
said second bridge determines an order of assigning the identification numbers to the predetermined sub-networks.

7. A network system according to claim 6, wherein
said second bridge determines the order of assigning the identification numbers in accordance with a state of the connections of the sub-networks in the predetermined sub-network, a route through which cycle synchronization is distributed, a manager for managing the state of the connections of the sub-networks and a manager for managing cycle synchronization in the network.

8. A network system according to any one of claims 1 to 7, wherein
N upper bits included in M-bit address in the identification number except for bits for the node and instructed with an identification-number instructing mask for the sub-network are used as the identification number for the sub-network, and
the residual lower bits (M - N) are used as the bus identification number.

9. A network system according to claim 8, wherein
said first bridge performs data routing control by making a reference to the sub-network identification number and the bus identification number.

10. A network system according to claim 8 or 9, wherein
said second bridge performs data routing control by making a reference to the sub-network identification number and the bus identification number.
